# EUROPEAN PATENT SPECIFICATION

(11) **EP 0 449 508 B1**
(45) Date of publication and mention of the grant of the patent: **02.08.1995**
(21) Application number: 91302475.8
(22) Date of filing: 21.03.1991
(51) Int. Cl.: G09G 3/36

(54) **Drive circuit for a liquid crystal display**
Steuereinrichtung für eine Flüssigkristallanzeige
Circuit de commande d'un affichage à cristaux liquides

(30) Priority: 28.03.1990 JP 81884/90
(43) Date of publication of application: 02.10.1991
(73) Proprietor: KABUSHIKI KAISHA TOSHIBA, Kawasaki-shi, Kanagawa-ken 210 (JP)
(72) Inventor: Sakamoto, Tsutomu, c/o Intellectual Property Div., Tokyo (JP)
(74) Representative: Muir, Ian R.

(56) References cited:
- EP-A- 0 167 408
- EP-A- 0 177 247
- EP-A- 0 181 598

## Description

The present invention generally relates to drive circuits for a liquid crystal display and, more particularly, to drive circuits for a liquid crystal display which can have substantially the same number of vertical picture elements as the number of valid scanning lines in a broadcast system.

Recently, many types of liquid crystal display devices have been developed and marketed. Such devices include pocket-size liquid crystal televisions, displays for lap-top computers, and liquid crystal projectors. Liquid crystal projectors have attracted particular attention since they may be used in high definition televisions.

There are two types of liquid crystal projectors. A first type is a one plate liquid crystal projector and a second type is a three plate liquid crystal projector. The one plate liquid crystal projector is of simple construction and is low in cost. However, the liquid crystal module of such a one plate projector has low definition, making it unsuitable for applications requiring high definition. Since three plate liquid crystal projectors offer high definition, they are more commonly used.

A monochrome and active matrix-type liquid crystal module, including switching devices such as thin film transistors (TFTs) associated with the picture elements, has been adopted for use in three plate liquid crystal projectors. In the past, the number of picture elements (or lines) in a vertical direction of a liquid crystal module for use in NTSC systems was, for example, approximately 220 to 240. This is about one-half of the number of valid scanning lines in an NTSC broadcast system. The three plate projectors were limited in the number of vertical lines because of problems in producing liquid crystal modules. However, at present, liquid crystal modules having 440 to 480 vertical picture elements for use in an NTSC system have been developed. This number is nearly equal to the number of valid scanning lines in the NTSC broadcast system and results from improved production techniques. The increased number of vertical lines provides an improved quality to the picture. This type of liquid crystal module will hereinafter be referred to as a liquid crystal module for full line display.

Two scanning systems may be used for liquid crystal modules for full line display. The first system is an interlace scanning system in which signals are applied to all picture elements during two fields. Generally, in an interlace scanning system, the first time the picture is scanned with only the picture elements of even lines. The second scan addresses the picture elements of odd lines. Each of these half scans is called a field. Two fields equal one complete picture or frame. The second scanning system is a non-interlace double scanning system in which signals are applied to all picture elements during one field by using a memory.

However, in the interlace scanning system, odd and even field pictures are displayed simultaneously because of the characteristic of liquid crystals to maintain a picture for some time period. Thus, non-interlace double scanning systems are generally utilized to drive a liquid crystal module for full line display.

A double scan transforming circuit is needed to implement the non-interlace double scanning system. The double scan transforming circuit uses either a field memory or a horizontal memory. Both circuits require digital circuits including an A/D converter, a field or a horizontal memory, and a D/A converter. This increases the size and the cost of the circuit. In particular, the three plate liquid crystal projector uses three pieces of the liquid crystal module. Thus, it requires three digital circuits. This further increases the size of the circuit and its cost.

EP-A-0181598 discloses a liquid crystal display device wherein thin-film transistors are arranged in the form of a matrix array. The drive circuity for the display device comprises a plurality of gate lines connected to the rows of picture elements, and a plurality of source lines connected respectively to the columns of picture elements. Each gate line is connected permanently to one row of picture elements and a switch is connected such that it may also be connected to either of the adjacent rows of picture elements. The switch is operated every vertical scanning period.

It is an object of the present invention to provide a drive circuit for a liquid crystal display for displaying a picture in accordance with picture signals applied thereto, said drive circuit comprising: a plurality of data lines; a plurality of gate lines; a liquid crystal display portion including picture elements arranged at intersections of said data lines and said gate lines; a data line driver coupled to said data lines for supplying picture signals to said picture elements; and a gate line driving means coupled to said gate lines for controlling the application of the picture signals to said picture elements, said gate line driving means including means for driving the (2N-1)th and 2Nth gate lines simultaneously during each successive horizontal period of a first field so that picture signals are applied to picture elements coupled to the (2N-1)th and 2Nth gate lines, and for driving the 2Nth and (2N+1)th gate lines simultaneously during each successive horizontal period of a second field so that picture signals are applied to picture elements coupled to the 2Nth and (2N+1)th gate lines, where N=1, 2, 3, ... and designates the horizontal line period, characterised in that the gate line driving means comprises a first gate line driver and a second gate line driver, the first and second gate line drivers being coupled respectively to alternate adjacent gate lines.

This driver eliminates the need for high cost and large size digital double scan transforming circuits. Accordingly, a full line display is achieved using a low cost driver.

A more complete description of the present invention and many of its attendant advantage will be readily obtained by reference to the following detailed description considered in connection with the accompanying drawings, in which:

Figure 1 is a block diagram of a drive circuit for a liquid crystal display.

Figure 2 is a block diagram of the liquid crystal module shown in Figure 1.

Figure 3 is a timing chart for the circuit shown in Figure 1.

Figure 4 illustrates the operation of the circuit shown in Figure 1.

Figure 5 is a block diagram of another embodiment of the liquid crystal module in accordance with the present invention.

Figures 6 and 7 are timing charts for the liquid crystal module shown in Figure 5.

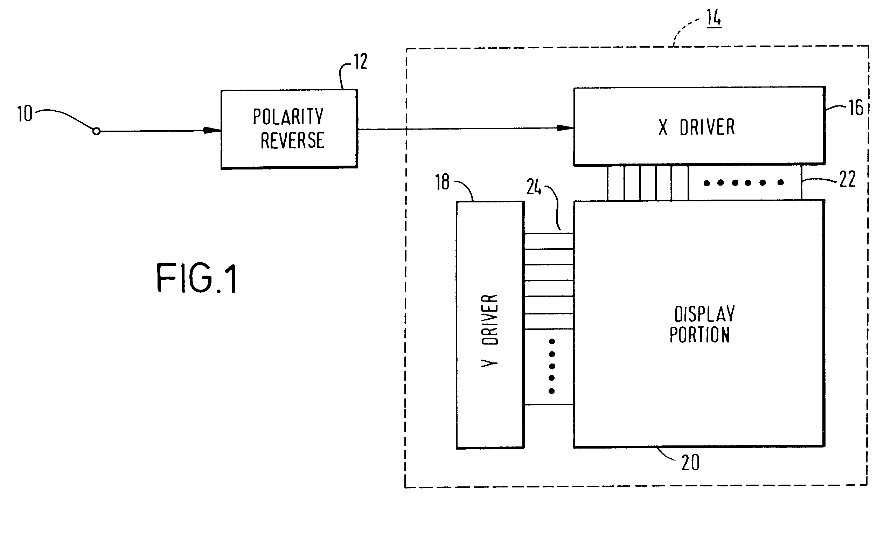

Figure 1 is a block diagram of a drive circuit for a liquid crystal display.

An input terminal 10 receives a television signal from, for example, a tuner (not shown). A polarity reversing circuit 12 is coupled to input terminal 10 and reverses the polarity of the television signal after every field period. Alternatively, the polarity of the picture signal may be reversed after every frame period or every horizontal scan period. Polarity reversing circuit 12 is coupled to liquid crystal module 14 and, more particularly, to X-driver 16 of liquid crystal module 14. Liquid crystal module 14 is a monochrome and active matrix type using thin film transistors (hereinafter referred to as TFTs). Liquid crystal module 14 includes X driver 16, a Y driver 18 and a display portion 20. X driver 16 and Y driver 18 drive display portion 20. X driver 16 samples and holds the television signal and outputs signals to data lines 22. Data lines 22 are coupled to TFTs (described below) arranged at each picture element of display portion 20. Y driver 18 controls gate lines 24 which are also coupled to the TFTs.

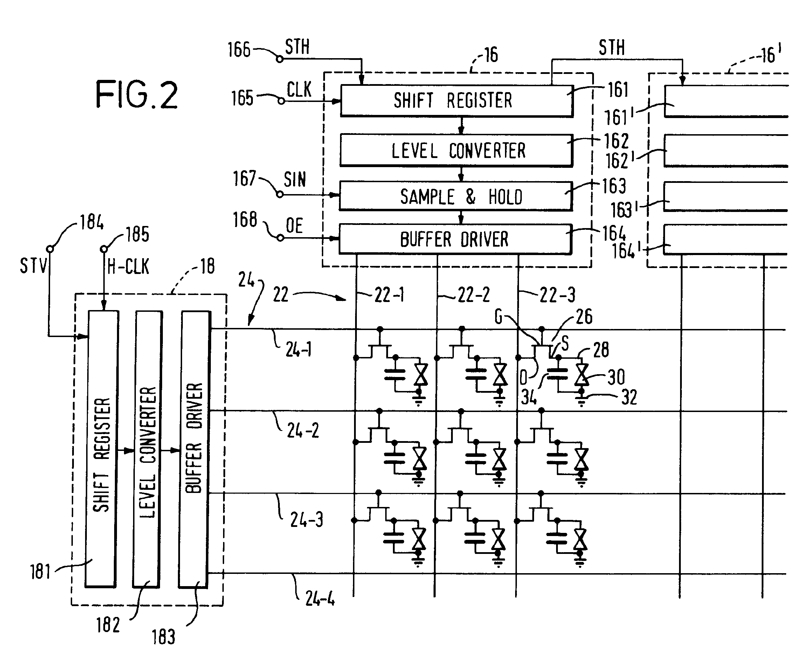

Figure 2 is a block diagram illustrating the details of liquid crystal module 14 of Figure 1. X driver 16 includes a shift register 161, a level converter 162, a sample and hold circuit 163 and a buffer driver 164 connected in series. Data lines 22-1, 22-2, 22-3, ... are coupled to buffer driver 164. When a start pulse is supplied from an input terminal 166, shift register 161 successively outputs an 'ON' or high pulse in synchronization with a clock pulse CLK supplied from an input terminal 165 as the bits within shift register 161 are shifted. The start pulse STH indicates the start of the horizontal display period. If two X drivers are used, a carry signal is output from shift register 161 of X driver 16 when the last bit is shifted from register 161. This carry signal becomes a start-pulse STH for a shift register 161′ of an X driver 16′ in a second stage. X driver 16′ also includes a level converter 162′, a sample and hold circuit 163′, and a buffer driver 164′ arranged in a manner similar to that of X driver 16.

In this embodiment, shift register 161 output 'ON' pulses during a horizontal line or period in accordance with the number of picture elements in the horizontal direction. Thus, if the number of the picture elements in the horizontal direction is 750, and a horizontal scanning period is 50 microseconds, the frequency of the clock signal CLK is equal to 15 MHz (=750/(50x10⁻⁶)). Level converter 162 amplifies the 'ON' pulses from shift register 161. Sample and hold circuit 163 samples and holds an input signal SIN in response to the amplified 'ON' pulses from the level converter 162. The input signal SIN is supplied from an input terminal 167 which is coupled to polarity reversing circuit 12. The amplified 'ON' pulses from level converter 162 serve as timing signals. Buffer driver 164 amplifies an output signal of sample and hold circuit 163 in accordance with a signal (output order signal) OE from an input terminal 168.

Y driver 18 includes a shift register 181, a level converter 182 and a buffer driver 183 connected in series. Gate lines 24-1, 24-2, 24-3, 24-4, . . . are coupled to buffer driver 183. Shift register 181 initially outputs a signal to gate line 24-1 in response to a vertical direction display start pulse STV supplied from an input terminal 184. Shift register 181 output signals to gate lines 24-2, 24-3, ... in response to a horizontal clock pulse H-CLK supplied from an input terminal 185. The horizontal clock pulse H-CLK is generated after every horizontal display period. Signals STH, CLK, OE, STV and H-CLK are generated from a timing signal generating circuit which is not shown.

Level converter 182 converts an output signal of shift register 181 from approximately 5 volts to a signal of approximately 30 volts in order to drive the gates G of the TFTs of display portion 20 as discussed below. Buffer driver 183 is a buffer amplifier for driving gate lines 24.

Respective picture elements are formed at the intersections of gate lines 24-1, 24-2, ... and data lines 22-1, 22-2 ... A thin film transistor is associated with each of the picture elements. The gates of the respective thin film transistors are coupled to one of gate lines 24. The drains of the respective thin film transistors are coupled to one of gate lines 22. For example, reference should be made to the picture element coupled to data line 22-3 and gate line 24-1. Drain D and gate G of thin film transistor (TFT) 26 are respectively coupled to data line 22-3 and gate line 24-1. A source S of TFT 26 is coupled to an electrode of picture element 28. A liquid crystal 30 is positioned between the electrode of picture element 28 and a common electrode 32. A capacitor 34 is coupled between the electrode of picture element 28 and common electrode 32 to stabilize the voltage of the electrode of picture element 28. When TFT 26 is switched ON by a signal applied to gate line 24-1, the television signal is supplied to liquid crystal 30 and capacitor 34. Typically, the number of data lines 22 is in a range from approximately 100 to approximately 300. Only three data lines are illustrated in Figure 2 to simply the drawings.

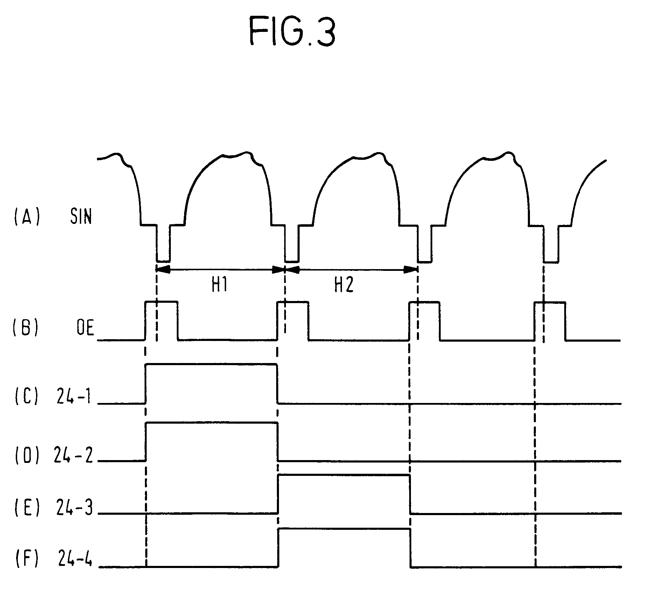

The operation of the drive circuit is discussed below with reference to Figure 3.

Input terminal 10 receives a television signal such as shown in Figure 3(A). It will be apparent to those in the art that although an NTSC system is described, the teachings of the present invention are readily applicable to other broadcasting standards such as PAL and SECAM. In Figure 3(A), 'H1' and 'H2' designate horizontal lines or scanning periods. The polarity of the television signal is reversed every field period (or frame period or horizontal scanning period) by polarity reversing circuit 12. The polarity reversal is performed to protect the liquid crystal display. That is, alternating current should be supplied to the liquid crystal display in order to prevent degradation of the liquid crystal material.

The output of polarity reversing circuit 12 is supplied to X driver 16. In X driver 16, the input television signal is sampled and held. The sampled signal is supplied to the data lines when the output order signal OE is enabled (see Figure 3(B)). Y driver 18 switches gate lines 24-1 and 24-2 'ON' simultaneously when the signal OE is enabled during horizontal scanning period H1. Figures 3(C) and (D) illustrate the signals applied to gate lines 24-1 and 24-2, respectively. Thus, the television picture signal is supplied to the picture elements coupled to gate lines 24-1 and 24-2. Gate lines 24-1 and 24-2 are switched 'OFF' when the next signal OE is output. However, during horizontal scanning period H2, gate lines 24-3 and 24-4 are switched 'ON' as shown in Figures 3(E) and 3(F). Thus, the television picture signal is supplied to the picture elements coupled to gate lines 24-3 and 24-4. Gate lines 24-5, 24-6 (not shown) are switched 'ON' when gate lines 24-3, 24-4 are switched 'OFF' during the next horizontal scanning period. The operation in which the television picture signal is successively supplied to adjacent rows of picture elements is continued until the last horizontal row of picture elements has been addressed. In this manner, television signals are written to all the picture elements of liquid crystal portion 20 during a first field period.

Referring to Figure 2, in shift register 161 of X driver 16, an 'ON' pulse is successively output from the first bit in the register in synchronization with clock pulse CLK when start pulse STH is supplied from input terminal 166. The 'ON' pulses from shift register 161 are amplified by level converter 162. The output signal from level converter 162 is used as a timing signal in sample and hold circuit 163 to sample and hold input signal SIN from input terminal 167. The output from sample and hold circuit 163 is supplied to buffer driver 164. The input signal to buffer driver 164 is amplified in response to output order signal OE (Figure 3(B)) from input terminal 168 and output to data lines 22. The signal OE is 'ON' or enabled during the blanking period (fly-back period) of the television signal SIN.

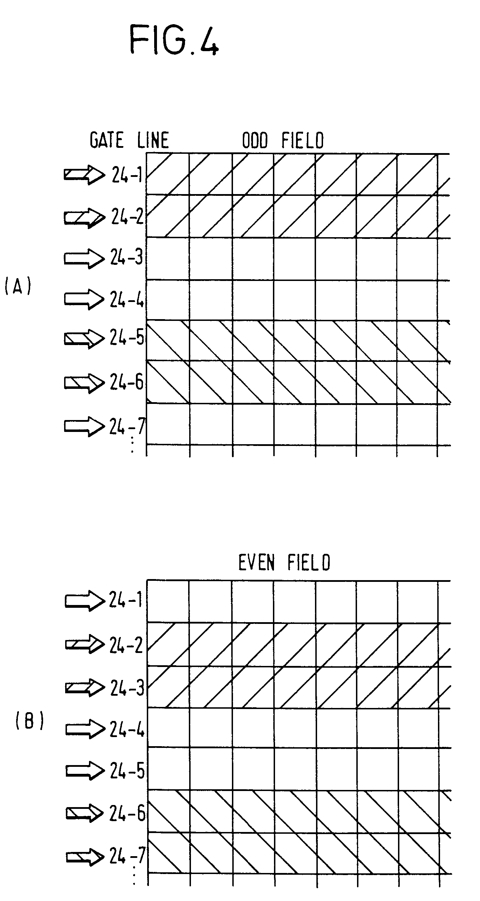

If two adjacent gate lines are 'ON' during one horizontal line period, the picture signal is simultaneously supplied to two rows of picture elements and thus the picture has half of the vertical definition. That is, if the liquid crystal module has 480 picture elements in the vertical direction, the vertical definition of the displayed picture is 240 elements. In accordance with this invention, however, the definition is increased by changing the gate line pairs which are switched 'ON' simultaneously in a first field from the gate line pairs which are switched 'ON' simultaneously in a second field. For example, as discussed above, in the first field, gate line pair 24-1 and 24-2 is switched 'ON' simultaneously. Subsequently, gate line pair 24-3 and 24-4 is switched 'ON' simultaneously. Next, gate line pair 24-5 and 24-6 is switched 'ON' simultaneously (see Figure 4(A)). In order to increase the vertical definition, in a second field, gate lines 24-2 and 24-3 are switched 'ON' simultaneously. Subsequently, gate lines 24-4 and 24-5 are switched 'ON' simultaneously. Next, gate lines 24-6, 24-7 are switched 'ON' simultaneously (see Figure 4(B)). This operation is summarized by noting in a first field, the (2N-1) th and 2Nth (N=1, 2, 3 ...) gate lines are switched ON simultaneously during each successive horizontal line period. In a second field, the 2Nth and (2N+1)th gate lines are switched ON simultaneously during each successive horizontal line period. The value of N is incremented by 1 after each horizontal line period.

This operation increases the vertical definition to 330 lines. Thus, in accordance with the present invention, the picture quality is comparable to the interlace scanning display of the CRT (cathode ray tube).

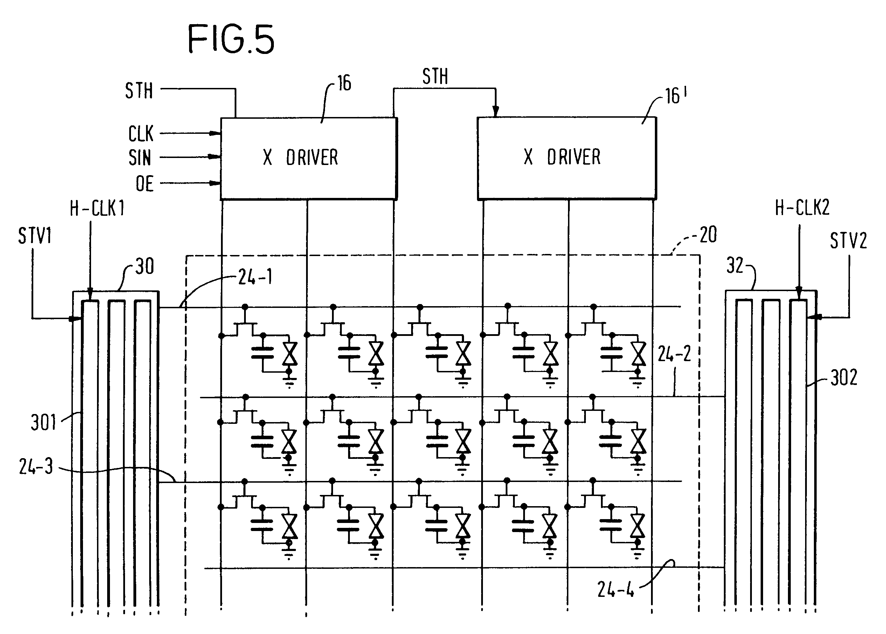

Figure 5 is a block diagram of a liquid crystal (display) module in accordance with the present invention, whereby the Y-driver, or gate line driving means, is arranged for more easily implementing these principles.

The liquid crystal display module is similar to the liquid crystal module of the device shown in Figure 2. However, in accordance with the invention, the module includes first and second Y-drivers. That is, gate lines 24-1, 24-3, ... are coupled to Y driver 30. Gate lines 24-2, 24-4,... are coupled to Y driver 32. Y drivers 30 and 32 are arranged on respective sides of display portion 20.

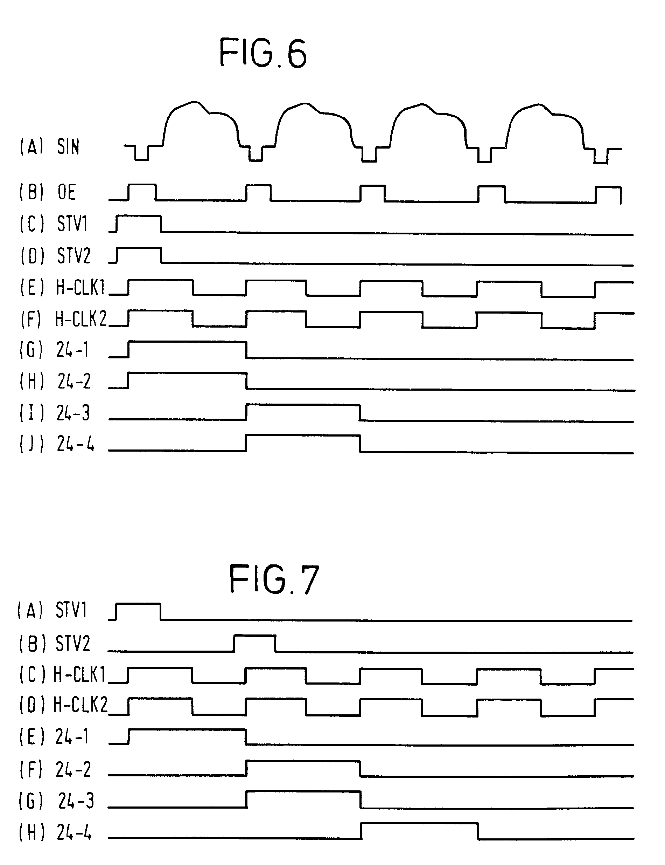

The operation of the device in accordance with the invention is described below using the timing charts illustrated in Figures 6 and 7.

X driver 16 receives a television signal SIN such as shown in Figure 6(A). The output order signal OE is output to X driver 16 during the horizontal blanking period as shown in Figure 6(B).

The operation during a first odd field is described initially with respect to Figure 6. Order signals STV1, STV2 (Figures 6(C) and (D)) for vertical display start are simultaneously input to shift registers 301, 302 of Y drivers 30, 32, respectively, after vertical blanking. Clock pulses H-CLK1, H-CLK2 (Figures 6(E) and (F)) have the same frequency as the horizontal line frequency and are input to shift registers 301, 302, respectively. Thus, at the rising edges of clock pulses H-CLK1, H-CLK2, both shift registers 301 and 302 shift the respective bits therein by one. Y driver 30 thus successively outputs gate pulses to gate lines 24-1, 24-3, ... Y driver 32 successively outputs gate pulses to gate lines 24-2, 24-4, .... In accordance with this operation, a first gate line pair 24-1 and 24-2, a second gate line pair 24-3 and 24-4, ... is switched ON simultaneously during successive horizontal periods. Figures 6(G) and 6(H) respectively illustrate the state of gate lines 24-1 and 24-2. It can be seen these gate lines are switched ON simultaneously during a first horizontal period. Figures 6(I) and 6(J) respectively illustrate the state of gate lines 24-3 and 24-4. It can be seen these gate lines are switched ON simultaneously during a second horizontal period. Thus, the gate lines of this device are switched in the same manner as in the device of Figure 2. (See Figure 4(A)).

The operation in a second even field is described below.

The vertical display start signal STV1 (Figure 7(A)) to Y driver 30 is input to shift register 301 at the start time of display after the vertical blanking. The vertical display start signal STV2 (Figure 7(B)) to Y driver 32 is input to shift register 321 at the first horizontal blanking time after the vertical blanking. Clock pulses H-CLK1 and H-CLK2 (Figure 7(C) and (D)) input to Y drivers 30 and 32 are the same as in the odd field. Y driver 30 successively outputs gate pulses to gate lines 24-1, 24-3, .... Y driver 32 successively outputs gate pulses to gate lines 24-2, 24-4, ... with a delay of one horizontal period relative to Y driver 30 (Figure 7(E) through (H)).

In accordance with this operation, gate line pairs 24-2 and 24-3, 24-4 and 24-5 (not shown) ... are successively switched ON simultaneously. That is, the same television signal is written to two adjacent lines of the liquid crystal display module simultaneously and the gate line pairs which are switched 'ON' simultaneously are different each field.

It will be recognized that although the above-described embodiments successively switch ON two adjacent gate lines simultaneously, the invention is not limited in this respect. Thus, for example, a driver for successively switching ON four adjacent gate lines simultaneously may be provided. Further, although the liquid crystal modules of the above-described embodiments are monochrome, the invention may also be applied to the color full line liquid crystal module in which color filters are arranged as stripes and in which picture elements are arranged in lattice.

In accordance with the invention, large size and high cost digital double scan transforming circuits are not required. The X driver may be realized by a low cost middle pressure-proof CMOS integrated circuit because the frequency of the clock input to the X driver is low such as 15 MHz. A full line display may be realized by using an ordinary X driver as discussed above. The vertical resolution achieved in accordance with the invention is comparable to that of an interlace scanning system for a CRT.

Additional advantages and modifications will readily occur to those skilled in the art. Therefore, the invention is not limited to the specific details and representative devices shown and described. Accordingly, various modifications may be made without departing from the inventive concept as defined by the appended claims.

## Claims

1. A drive circuit for a liquid crystal display for displaying a picture in accordance with picture signals applied thereto, said drive circuit comprising: a plurality of data lines (22); a plurality of gate lines (24); a liquid crystal display portion (20) including picture elements (28) arranged at intersections of said data lines (22) and said gate lines (24); a data line driver (16) coupled to said data lines (22) for supplying picture signals to said picture elements (28); and a gate line driving means (130,132) coupled to said gate lines (24) for controlling the application of the picture signals to said picture elements (28), said gate line driving means (130,132) including means for driving the (2N-1)th and 2Nth gate lines (24) simultaneously during each successive horizontal period of a first field so that picture signals are applied to picture elements (28) coupled to the (2N-1)th and 2Nth gate lines (24), and for driving the 2Nth and (2N+1)th gate lines (24) simultaneously during each successive horizontal period of a second field so that picture signals are applied to picture elements (28) coupled to the 2Nth and (2N+1)th gate lines (24), where N=1, 2, 3, ... and designates the horizontal line period, characterised in that the gate line driving means comprises a first gate line driver (130) and a second gate line driver (132), the first and second gate line drivers (130,132) being coupled respectively to alternate adjacent gate lines (24-1, 24-3; 24-2, 24-4).

2. A drive circuit for a liquid crystal display as claimed in claim 1, wherein said picture elements (28) are arranged in a row and column matrix.

3. A drive circuit for a liquid crystal display as claimed in claim 1 or 2, wherein the first field is an odd field and the second field is an even field.

4. A drive circuit for a liquid crystal display as claimed in claim 1 or 2, wherein the first field is an even field and the second field is an odd field.

5. A drive circuit for a liquid crystal display as claimed in any preceding claim, further comprising a polarity reverse circuit (12) connected between the data line driver (16) and an input terminal (10) for the picture signal.

6. A drive circuit for a liquid crystal display as claimed in any preceding claim, wherein the data line driver (16) comprises an X driver (16) for sampling and holding the input picture signal and outputting an output to the data supply lines.

7. A drive circuit for a liquid crystal display as claimed in claim 6, wherein the X driver (16) comprises:
a shift register (161) for outputting in response to a clock signal;
a level converter (162) for amplifying the output from the shift register (161);
a sample and hold circuit (163) for sampling and holding the input picture signal at the timing of the output from the level converter (162); and
a buffer driver (164) for amplifying the output from the sample and hold circuit (163), and for supplying the output from the sample and hold circuit (163) to the data supply lines.

8. A drive circuit for a liquid crystal display as claimed in claim 6 or 7, wherein the X driver (16) comprises a CMOS integrated circuit.

9. A drive circuit for a liquid crystal display as claimed in any preceding claim, wherein the gate line driver (18) comprises a Y driver (18) for controlling the gate lines (24) to activate two adjacent gate lines simultaneously.

10. A drive circuit for a liquid crystal display as claimed in claim 9, wherein the Y driver (18) comprises:
a shift register (181) for outputting outputs for activating the gate line (24) in response to a clock signal;
a level converter (182) for amplifying the output from the shift register (181); and
a buffer driver (183) for amplifying the output from the level converter (182).

11. A drive circuit for a liquid crystal display as claimed in any preceding claim, wherein the number of picture elements (28) of said liquid crystal display portion (20) in a vertical direction is substantially equal to the number of valid scanning lines in a broadcast system.

12. A drive circuit for a liquid crystal display as claimed in claim 11, wherein the liquid crystal display comprises a monochrome display.

13. A drive circuit for a liquid crystal display as claimed in any preceding claim, further comprising a plurality of thin-film transistors (26) respectively associated with each of said picture elements (28), gates (G) of said thin-film transistors (26) being coupled to said gate lines (24), one of the source (S) and drain (D) terminals of said thin-film transistors (26) being coupled to said data lines (22), and the other of said source (S) and drain (D) terminals of said thin-film transistors (26) being coupled to the associated picture element (28).

## Patentansprüche

1. Treiberschaltung für eine Flüssigkristallanzeige, geeignet zum Anzeigen eines Bildes gemäß einem daran angelegten Bildsignal, wobei die Treiberschaltung umfaßt:
eine Anzahl Datenleitungen (22);
eine Anzahl Gateleitungen (24);
einen Flüssigkristallanzeige-Abschnitt (20), umfassend Bildelemente (28), die an den Schnittpunkten der Datenleitungen (22) und der Gateleitungen (24) angeordnet sind;
einen mit den Datenleitungen (22) verbundenen Datenleitungstreiber (16), geeignet zum Einspeisen der Bildsignale in die Bildelemente (28); und
eine mit den Gateleitungen (24) verbundene Gateleitungs-Treibereinrichtung (130, 132), dazu geeignet, das Anlegen der Bildsignale an die Bildelemente (28) zu steuern, wobei die Gateleitungs-Treibereinrichtung (130, 132) Vorrichtungen enthält, um die Gateleitungen (24) mit den Nummern (2N-1) und 2N gleichzeitig während jeder aufeinanderfolgenden Zeilendauer eines ersten Halbbilds anzusteuern, so daß Bildsignale an die Bildelemente (28) angelegt werden, die mit den Gateleitungen (24) mit den Nummern (2N-1) und 2N verbunden sind,
und dazu, die Gateleitungen (24) mit den Nummern 2N und (2N+1) gleichzeitig während jeder aufeinanderfolgenden Zeilendauer eines zweiten Halbbilds anzusteuern, so daß Bildsignale an die Bildelemente (28) angelegt werden, die mit den Gateleitungen (24) mit den Nummern 2N und (2N+1) verbunden sind, wobei mit N = 1, 2, 3, ... die horizontale Zeilendauer durchnumeriert ist, dadurch gekennzeichnet, daß
die Gateleitungs-Treibereinrichtung einen ersten Gateleitungstreiber (130) und einen zweiten Gateleitungstreiber (132) umfaßt und die ersten und zweiten Gateleitungstreiber (130, 132) jeweils an wechselnde, benachbarte Gateleitungen (24-1, 24-3; 24-2, 24-4) angeschlossen sind.

2. Treiberschaltung für eine Flüssigkristallanzeige nach Anspruch 1, wobei die Bildelemente (28) in einer Zeilen- und Spaltenmatrix angeordnet sind.

3. Treiberschaltung für eine Flüssigkristallanzeige nach Anspruch 1 oder 2, wobei das erste Halbbild ein ungerades Halbbild und das zweite Halbbild ein gerades Halbbild ist.

4. Treiberschaltung für eine Flüssigkristallanzeige nach Anspruch 1 oder 2, wobei das erste Halbbild ein gerades Halbbild und das zweite Halbbild ein ungerades Halbbild ist.

5. Treiberschaltung für eine Flüssigkristallanzeige nach irgendeinem vorhergehenden Anspruch, zudem umfassend eine Polaritätsumkehrschaltung (12), die zwischen den Datenleitungstreiber (16) und einen Eingangsanschluß (10) für das Bildsignal geschaltet ist.

6. Treiberschaltung für eine Flüssigkristallanzeige nach irgendeinem vorhergehenden Anspruch, wobei der Datenleitungstreiber (16) einen X-Treiber (16) umfaßt, geeignet zum Abtasten und Halten des Eingangsbildsignals und zum Ausgeben eines Ausgangssignals auf die Datenversorgungsleitungen.

7. Treiberschaltung für eine Flüssigkristallanzeige nach Anspruch 6, wobei der X-Treiber (16) umfaßt:
ein Schieberegister (161), geeignet zum Ausgeben abhängig von einem Taktsignal;
einen Pegelumsetzer (162), geeignet zum Verstärken des Ausgangssignals des Schieberegisters (161);
eine Abtasthalteschaltung (163), geeignet zum Abtasten und Halten des Eingangsbildsignals gemäß dem zeitlichen Verlauf des Ausgangssignals des Pegelumsetzers (162); und
einen Puffertreiber (164), geeignet zum Verstärken des Ausgangssignals der Abtasthalteschaltung (163) und zum Einspeisen des Ausgangssignals der Abtasthalteschaltung (163) in die Datenversorgungsleitungen.

8. Treiberschaltung für eine Flüssigkristallanzeige nach Anspruch 6 oder 7, wobei der X-Treiber (16) eine integrierte CMOS-Schaltung enthält.

9. Treiberschaltung für eine Flüssigkristallanzeige nach irgendeinem vorhergehenden Anspruch, wobei der Gateleitungstreiber (18) einen Y-Treiber (18) enthält, dazu geeignet, die Gateleitungen (24) zu steuern und zwei benachbarte Gateleitungen gleichzeitig zu aktivieren.

10. Treiberschaltung für eine Flüssigkristallanzeige nach Anspruch 9, wobei der Y-Treiber (18) umfaßt:
ein Schieberegister (181), geeignet zum Ausgeben von Ausgangssignalen, die die Gateleitung (24) abhängig von einem Taktsignal aktivieren;
einen Pegelumsetzer (182), geeignet zum Verstärken des Ausgangssignals des Schieberegisters (181); und
einen Puffertreiber (183), geeignet zum Verstärken des Ausgangssignals des Pegelumsetzers (182).

11. Treiberschaltung für eine Flüssigkristallanzeige nach irgendeinem vorhergehenden Anspruch, wobei die Anzahl der Bildelemente (28) des Flüssigkristallanzeige-Abschnitts (20) in senkrechter Richtung im wesentlichen genauso groß ist wie die Anzahl der gültigen Abtastzeilen in einem Rundfunksystem.

12. Treiberschaltung für eine Flüssigkristallanzeige nach Anspruch 11, wobei die Flüssigkristallanzeige eine einfarbige Anzeige enthält.

13. Treiberschaltung für eine Flüssigkristallanzeige nach irgendeinem vorhergehenden Anspruch, ferner umfassend eine Anzahl Dünnfilmtransistoren (26), die jeweils mit jedem Bildelement (28) verbunden sind, wobei die Gates (G) der Dünnfilmtransistoren (26) mit den Gateleitungen (24) verbunden sind und entweder der Sourceanschluß (S) oder der Drainanschluß (D) der Dünnfilmtransistoren (26) mit den Datenleitungen (22) verbunden ist und der andere Anschluß der Dünnfilmtransistoren (26) (der Sourceanschluß (S) oder der Drainanschluß (D)) mit dem entsprechenden Bildelement (28) verbunden ist.

## Revendications

1. Un circuit de commande d'un affichage à cristaux liquides pour afficher une image en accord avec des signaux d'image appliqués à ce dernier, ledit circuit de commande comprenant : un ensemble de lignes de données (22) ; un ensemble de lignes à gâchettes (24) ; une partie d'affichage à cristaux liquides (20) comprenant des éléments d'image (28) montés aux intersections desdites lignes de données (22) et desdites lignes à gâchettes (24) ; un organe de commande (16) des lignes de données relié auxdites lignes de données (22) pour fournir des signaux d'image auxdits éléments d'image (28) ; et des moyens de commande (130, 132) des lignes à gâchettes reliés auxdites lignes à gâchettes (24) pour commander l'application des signaux d'image vers lesdits éléments d'image (28), lesdits moyens de commande (130, 132) des lignes à gâchettes comprenant des moyens pour commander les (2N-1)ième et 2Nième lignes à gâchettes (24) simultanément pendant chaque période horizontale successive d'une première trame de sorte que des signaux d'image sont appliqués à des éléments d'image (28) reliés aux (2N-1)ième et 2Nième lignes à gâchettes (24), et pour commander les 2Nième et (2N+1)ième lignes à gâchettes (24) simultanément pendant chaque période horizontale successive d'une seconde trame de sorte que des signaux d'image sont appliqués à des éléments d'image (28) reliés aux 2Nième et (2N+1)ième lignes à gâchettes (24), où N = 1, 2, 3, ... et désigne la période de ligne horizontale, caractérisé en ce que les moyens de commande de lignes à gâchettes comprennent un premier organe de commande de lignes à gâchettes (130) et un second organe de commande de lignes à gâchettes (132), les premier et second organes de commande de lignes à gâchettes (130, 132) étant reliés respectivement à des lignes à gâchettes voisines alternées (24-1, 24-3 ; 24-2, 24-4).

2. Un circuit de commande d'un affichage à cristaux liquides tel que revendiqué à la revendication 1, dans lequel lesdits éléments d'image (28) sont disposés dans une matrice à rangées et colonnes.

3. Un circuit de commande d'un affichage à cristaux liquides tel que revendiqué à la revendication 1 ou 2, dans lequel la première trame est une trame impaire et la seconde trame est une trame paire.

4. Un circuit de commande d'un affichage à cristaux liquides tel que revendiqué à la revendication 1 ou 2, dans lequel la première trame est une trame paire et la seconde trame est une trame impaire.

5. Un circuit de commande d'un affichage à cristaux liquides tel que revendiqué à l'une quelconque des revendications précédentes, comprenant en outre un circuit d'inversion de polarité (12) relié entre l'organe de commande (16) des lignes de données et une borne d'entrée (10) pour le signal d'image.

6. Un circuit de commande d'un affichage à cristaux liquides tel que revendiqué à l'une quelconque des revendications précédentes, dans lequel l'organe de commande (16) des lignes de données comprend un organe de commande des X (16) pour échantillonner et maintenir le signal d'image d'entrée et délivrer un signal de sortie vers les lignes d'amenée des données.

7. Un circuit de commande d'un affichage à cristaux liquides tel que revendiqué à la revendication 6, dans lequel l'organe de commande des X (16) comprend :
un registre à décalage (161) pour délivrer un signal de sortie en réponse à un signal d'horloge ;
un convertisseur de niveau (162) pour amplifier le signal de sortie du registre à décalage (161) ;
un circuit d'échantillonnage et de maintien (163) pour échantillonner et maintenir le signal d'image d'entrée à la synchronisation du signal de sortie du convertisseur de niveau (162) ; et
un organe de commande formant tampon (164) pour amplifier le signal de sortie du circuit d'échantillonnage et de maintien (163), et pour appliquer le signal de sortie du circuit d'échantillonnage et de maintien (163) aux lignes d'amenée des données.

8. Un circuit de commande d'un affichage à cristaux liquides tel que revendiqué à la revendication 6 ou 7, dans lequel l'organe de commande des X (16) comprend un circuit intégré de type CMOS.

9. Un circuit de commande d'un affichage à cristaux liquides tel que revendiqué à l'une quelconque des revendications précédentes, dans lequel l'organe de commande de lignes à gâchettes (18) comprend un organe de commande des Y (18) pour contrôler les lignes à gachettes (24) afin d'actionner simultanément deux lignes à gâchettes voisines.

10. Un circuit de commande d'un affichage à cristaux liquides tel que revendiqué à la revendication 9, dans lequel l'organe de commande des Y (18) comprend :
un registre à décalage (181) pour délivrer des signaux de sortie afin d'activer la ligne à gâchettes (24) en réponse à un signal d'horloge ;
un convertisseur de niveau (182) pour amplifier le signal de sortie du registre à décalage (181) ; et
un organe de commande formant tampon (183) pour amplifier le signal de sortie du convertisseur de niveau (182).

11. Un circuit de commande d'un affichage à cristaux liquides tel que revendiqué à l'une quelconque des revendications précédentes, dans lequel le nombre d'éléments d'image (28) de ladite partie d'affichage à cristaux liquides (20) dans une direction verticale est sensiblement égal au nombre correct des lignes de balayage d'un système de télédiffusion.

12. Un circuit de commande d'un affichage à cristaux liquides tel que revendiqué à la revendication 11, dans lequel l'affichage à cristaux liquides comprend un affichage monochrome.

13. Un circuit de commande d'un affichage à cristaux liquides tel que revendiqué à l'une quelconque des revendications précédentes, comprenant en outre un ensemble de transistors à couches minces (26) associés respectivement à chacun desdits éléments d'image (28), les gâchettes (G) desdits transistors à couches minces (26) étant reliées auxdites lignes à gâchettes (24), l'une des bornes émetteur (S) ou collecteur (D) desdits transistors à couches minces (26) étant reliée auxdites lignes de données (22). et l'autre desdites bornes émetteur (S) ou collecteur (D) desdits transistors à couches minces (26) étant reliée à l'élément d'image associé (28).
